# FASCICULE DE BREVET EUROPEEN

(11) **EP 2 647 292 B1**
(45) Date de publication et mention de la délivrance du brevet: **19.11.2014**
(21) Numéro de dépôt: 13305437.9
(22) Date de dépôt: 04.04.2013
(51) Int. Cl.: A22C 17/00

(54) **Dispositif de distribution de piques à brochettes**
Speisenverteilungssystem
Skewer distribution system

(30) Priorité: 05.04.2012 FR 1253131
(43) Date de publication de la demande: 09.10.2013
(73) Titulaire: Emsens Antoine, 42490 Fraisses (FR)
(72) Inventeur: Paya, Denis, 42380 Périgneux (FR); Delobel, Jean-Charles, 42140 Chevrières (FR)
(74) Mandataire: Cabinet Laurent & Charras

(56) Documents cités:
- FR-A1- 2 913 312
- US-A- 3 164 293
- US-A- 4 069 960
- US-A- 4 729 501

## Description

L'invention se rattache au secteur technique de la fabrication semi-automatique de brochettes de viande et/ou de légumes ou autres.

Plus particulièrement, l'invention concerne un dispositif de distribution de piques à brochettes en vue d'alimenter la machine d'embrochement.

Selon l'enseignement du brevet FR 2 725 791, on connaît une machine comprenant des plaques présentant des empreintes aptes à recevoir les ingrédients nécessaires à l'élaboration de la brochette. Ces plaques peuvent, par exemple, être accouplées entre-elles de manière à constituer un convoyeur sous forme d'une bande sans fin ou sous forme d'un carrousel.

Les plaques sont amenées successivement en regard d'un poste d'embrochement conformé pour permettre l'introduction d'un pique dans les différents ingrédients positionnés dans l'empreinte.

Avec ce type de machine, les piques utilisés sont le plus souvent constitués par des bâtonnets en bois de forme générale cylindrique.

On a également proposé de réaliser des brochettes à partir de piques du type « drapeau » présentant une partie rectiligne d'embrochement et une partie formant talon de préhension en débordement de l'un des côtés de la partie rectiligne.

Le plus souvent avec ce type de piques, l'embrochement est effectué manuellement.

Toutefois, le brevet FR 2 913 312 dont le demandeur de la présente est également titulaire propose une solution permettant l'embrochement automatique des différents ingrédients au moyen de piques de section méplate et notamment de piques dits « drapeaux ».

Comme indiqué précédemment, les ingrédients sont disposés dans une empreinte communiquant à chacune de ses extrémités avec des rainures formées dans l'épaisseur de la plaque, en alignement avec la partie médiane de ladite empreinte.

L'embrochement automatique s'effectue lorsque le pique est disposé à plat nécessitant, par conséquent, des moyens spécifiques pour le pousser et le guider dans la rainure correspondante en vue de l'opération d'embrochement en tant que telle.

Le document US 3 164 293 divulgue un dispositif de distribution adapté pour des bâtonnets méplates en vue d'alimenter une machine d'embrochement comprennant en combinaison:
- un ensemble de chargement en vrac de bâtonnets,
- un ensemble apte à sélectionner un bâtonnet,
- un ensemble de basculement, apte, d'une part, à orienter le bâtonnet sélectionné verticalement et d'autre part, à le libérer dans cette position,
- lesdits ensembles étant en communication et assujettis à des organes pour être commandés en synchronisme.

A partir de cet état de la technique, le problème que se propose de résoudre l'invention est de pouvoir, pour l'opération d'embrochement, disposer le pique drapeau non plus à plat, mais sur sa tranche de manière à ce qu'il soit en appui dans les rainures formées coaxialement à l'empreinte recevant les ingrédients, sur la totalité de la longueur de la tranche considérée, c'est-à-dire celle à partir de laquelle le talon de préhension n'est pas en débordement. Le fait de positionner le pique drapeau sur la tranche évite de faire appel a des moyens sophistiqués de guidage tout en permettant de soumettre ledit pique à un moyen d'embrochement agissant directement sur le talon.

Pour résoudre un tel problème, il a été conçu et mis au point selon l'invention, un dispositif de distribution de piques à brochettes dits « drapeaux » en vue d'alimenter une machine d'embrochement, lequel dispositif est conforme aux caractéristiques de la revendication 1.

Ces caractéristiques permettent donc d'alimenter en continu une machine d'embrochement automatique en positionnant les piques « drapeaux » sur leur tranche pour les soumettre directement à un organe d'embrochement apte à exercer un effort de poussée sur le talon positionné verticalement et parfaitement guidé par exemple dans la rainure formée coaxialement à l'empreinte recevant les ingrédients devant être embrochés.

L'opération de brassage a pour effet de disposer les piques de la couche inférieure sensiblement en position verticale, c'est-à-dire sur leur tranche.

Pour résoudre le problème posé d'assurer cette fonction de brassage des piques, les moyens sont constitués par une plaque accouplée à un organe actionneur sous forme par exemple d'un vérin commandé en translation selon un mouvement de va et vient, ladite plaque étant accouplée perpendiculairement à la tige de l'organe actionneur et disposée transversalement dans la chambre pour coopérer avec les piques sur au moins une grande partie de leur longueur, lesdits piques étant également disposés transversalement dans la chambre.

Pour résoudre le problème posé d'assurer la sélection d'un seul pique, la chambre est inclinée en direction du haut, l'organe actionneur étant disposé dans la partie basse de ladite chambre dont la partie haute présente une fente en relation avec un volet escamotable pour sélectionner un pique et le diriger dans l'ensemble de basculement.

Pour résoudre le problème posé de libérer le pique sélectionné en vue de le soumettre à l'action de l'ensemble de basculement, le volet escamotable est assujetti à un vérin commandé en synchronisme avec le vérin de la plaque de brassage pour ouvrir le volet lorsque ledit vérin de la plaque est arrêté.

Pour résoudre le problème posé de positionner sur la tranche les piques et en considérant leur profil résultant de la présence du talon, le fond de la chambre et la plaque présentent un profil transversal correspondant sensiblement à celui des piques.

Dans une forme de réalisation de l'ensemble de basculement, la partie de guidage est constituée par deux bras parallèles et inclinés portés par une platine assujettie à l'organe actionneur, tandis que la partie de réception est constituée par deux bras parallèles et inclinés en sens inverse des bras de la partie de guidage en étant portée par une platine assujettie à l'autre organe actionneur, lesdits bras constituant en combinaison un V de centrage délimitant une encoche pour la réception du pique, la came de basculement étant solidaire de la platine supportant les bras de la partie de réception et disposée à proximité des bras considérés du côté du talon du pique.

Pour résoudre le problème posé d'assurer le chargement en vrac des piques, l'ensemble de chargement des piques est constitué par un tapis sans fin entraîné pas à pas et présentant une pluralité de compartiments recevant en vrac une quantité de piques dont les talons sont disposés d'un même côté, chaque compartiment étant apte à être mis en communication avec la chambre de l'ensemble de sélection au fur et à mesure du déplacement du tapis sans fin.

Avantageusement, le compartiment de l'ensemble de chargement est en communication avec la chambre de sélection par l'intermédiaire d'un tiroir escamotable par un organe actionneur.

L'invention est exposée ci-après plus en détail à l'aide des figures des dessins annexés dans lesquels :
- la figure 1 est une vue en perspective d'une forme de réalisation d'un pique dit « drapeau » parfaitement connue par un homme du métier ;

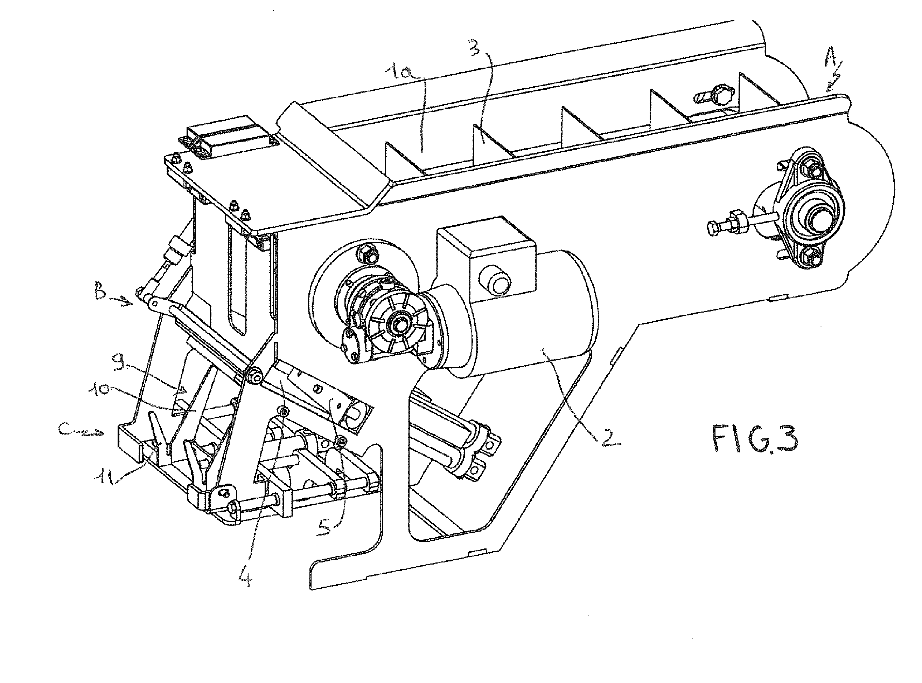

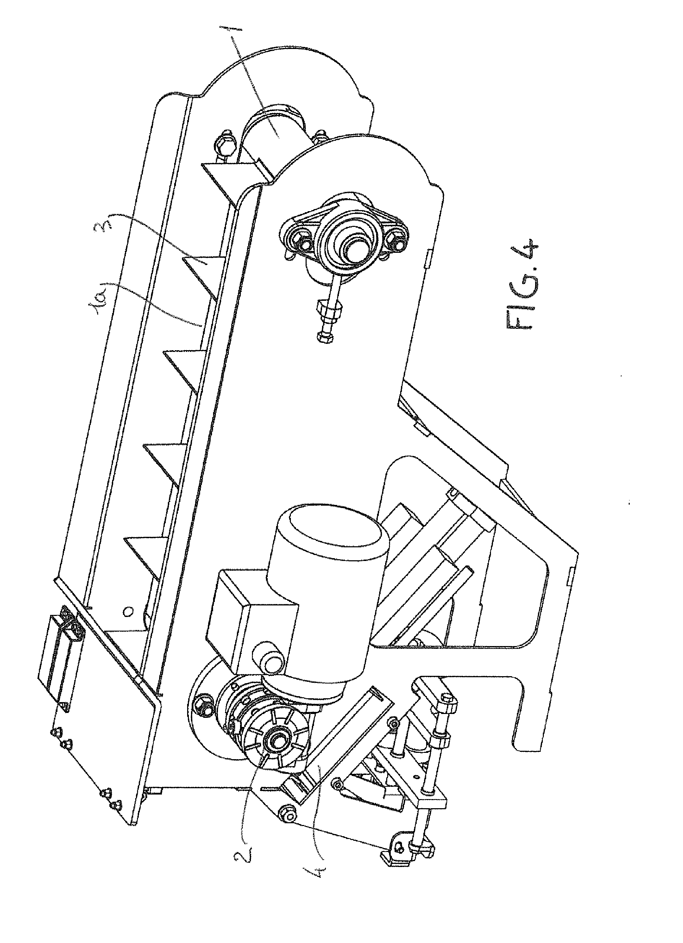

- les figures 2, 3 et 4 sont des vues en perspective de l'ensemble du dispositif de distribution selon les caractéristiques de l'invention considérées selon différents angles de vue ;

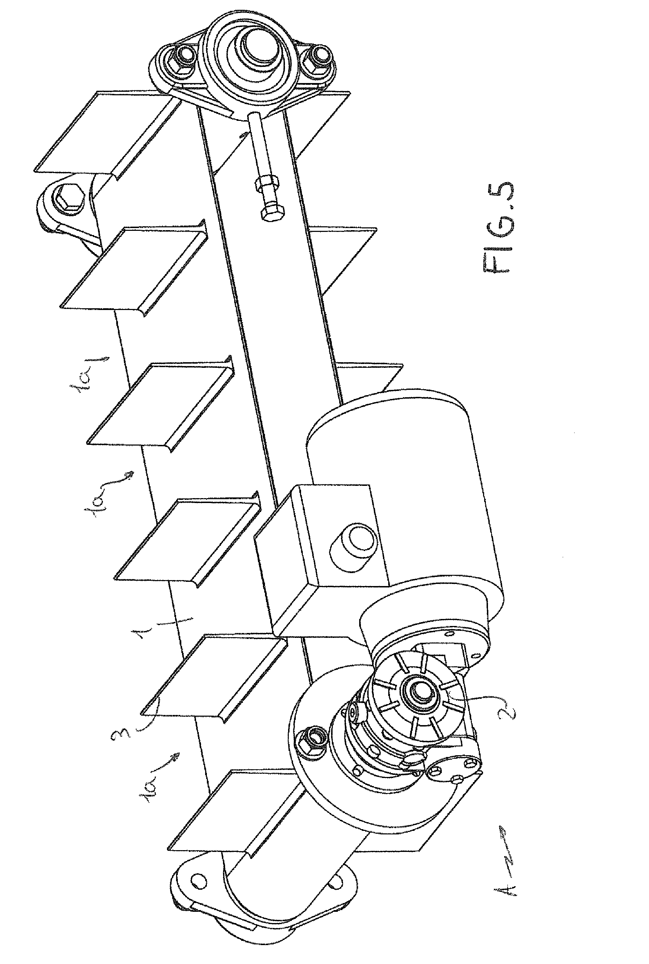

- la figure 5 est une vue en perspective de l'ensemble chargeur considéré isolément ;
- la figure 6 est une vue en perspective de l'ensemble chambre de sélection ;
- la figure 7 est une autre vue en perspective de la chambre de sélection considérée selon un autre angle ;

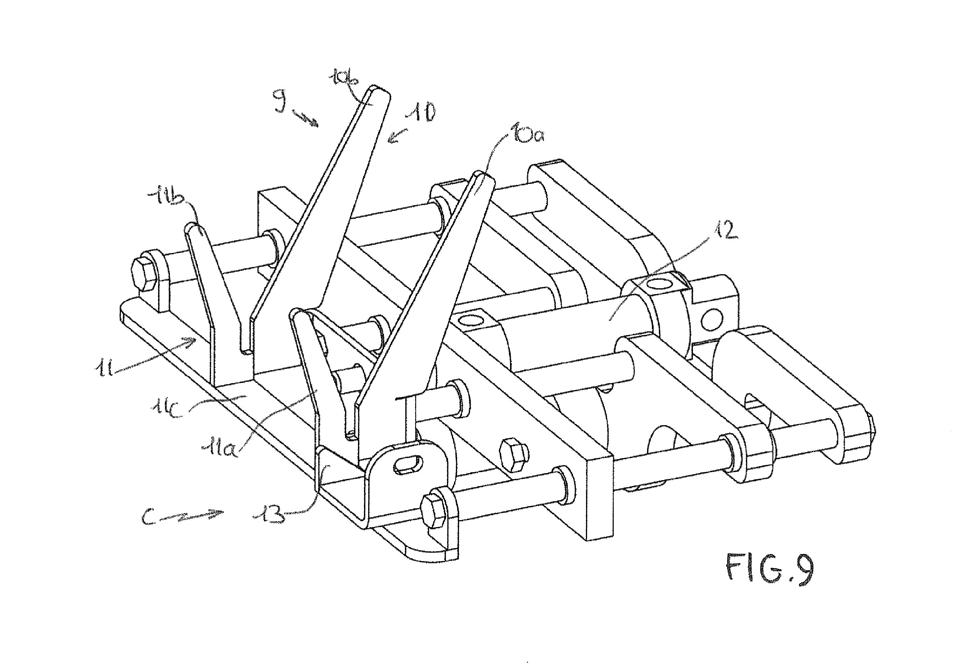

- les figures 8 et 9 sont des vues en perspective de l'ensemble basculeur ;

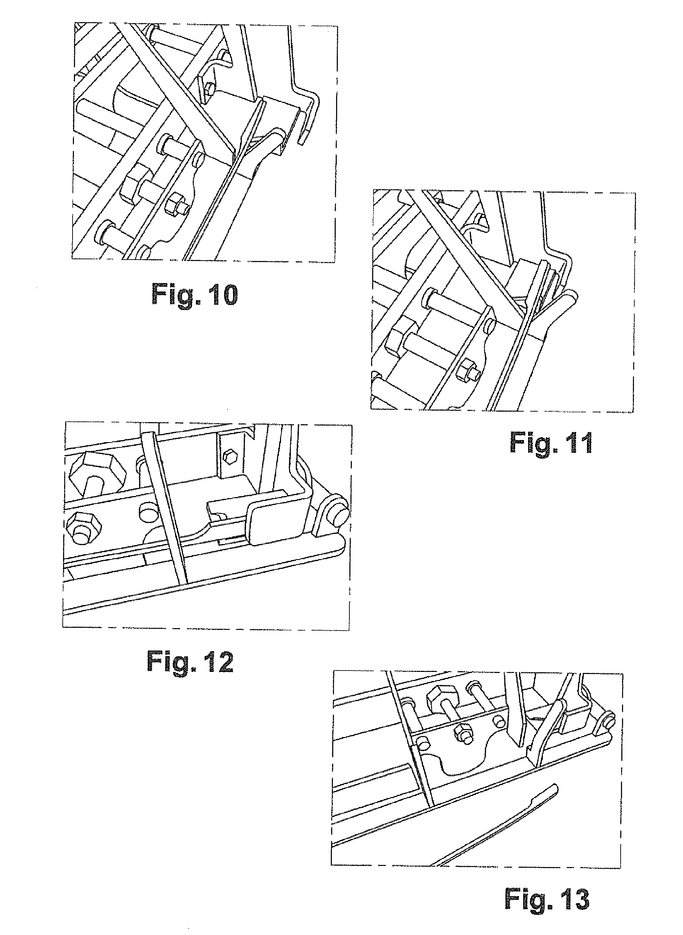

- les figures 10, 11, 12 et 13 sont des vues partielles à caractère schématique montrant le principe de fonctionnement de l'ensemble basculeur pour l'orientation du pique sélectionné ;

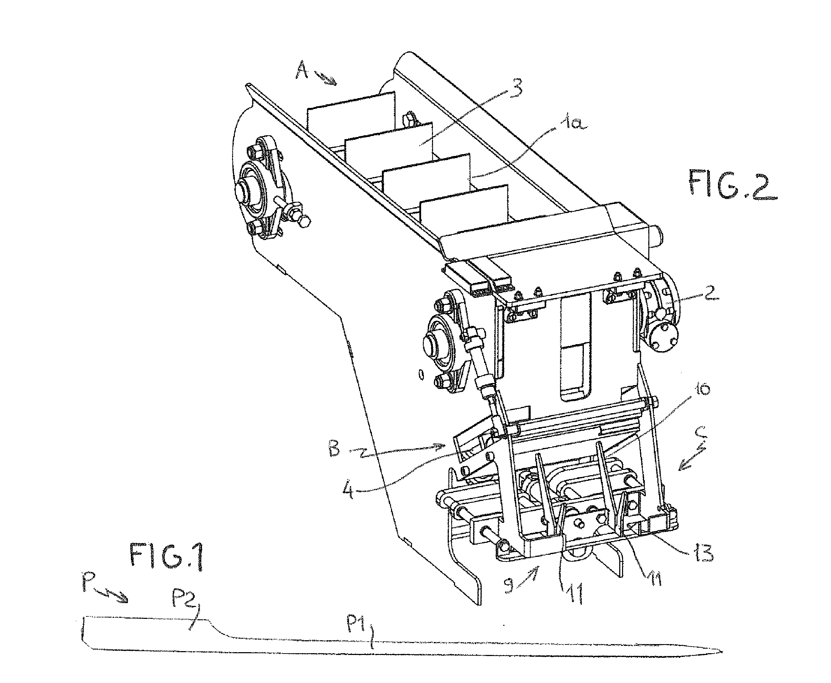

La figure 1 montre une vue en perspective d'une forme de réalisation d'un pique dit « drapeau » parfaitement connu par un homme du métier et désigné dans son ensemble par (P). Ce pique (P), généralement de section méplate, présente une partie rectiligne (P1) dont l'une des extrémités est éffilée tandis que l'autre extrémité présente un talon de préhension (P2) formé en débordement de l'un des côtés seulement de la partie rectiligne (P1). Généralement, ces piques (P) sont réalisés en bois, bambou ou autres matériaux. Comme indiqué, le but recherché est de pouvoir assurer l'alimentation d'une machine automatique d'embrochement avec notamment pour objectif, de pouvoir positionner le pique dans une position verticale, c'est-à-dire sur sa tranche avec son talon (P2) dirigé vers le haut, (*position illustrée* *figure 1*).

Dans ce but, le dispositif de distribution selon l'invention comprend, en combinaison, trois ensembles (A), (B) et (C) disposés en communication et assujettis à des organes pour être commandés en synchronisme.

L'ensemble (A) constitue un ensemble de chargement en vrac des piques (P). L'ensemble (A) est constitué par exemple par un tapis sans fin (1) entraîné pas à pas par un moteur réducteur (2). Ce tapis (1) présente une pluralité de compartiment (1a) séparés par exemple par des plaques verticales (3) rendues solidaires par tous moyens connus et appropriés dudit tapis. Ces compartiments (1a) sont destinés à recevoir en vrac une quantité de pique (P) dont les talons (P2) sons disposés d'un même côté.

Chaque compartiment (1a) garni des piques (P) est apte à être mis en communication au fur et à mesure du déplacement du tapis sans fin (1), avec une chambre (4) que présente l'ensemble (B) qui constitue un ensemble de sélection.

La chambre (4) est donc destinée à recevoir la quantité de piques (P) en provenance de l'un des compartiments (1a) du tapis (1) de l'ensemble de chargement. A noter que le compartiment (1a) de l'ensemble du chargement considéré peut être en communication avec la chambre de sélection (4), par l'intermédiaire d'un tiroir escamotable assujetti à un organe actionneur (*non représenté*).

La chambre (4) est assujettie à des moyens aptes à assurer un brassage des piques.

Ces moyens sont constitués par une plaque (5) accouplée à un organe actionneur (6) du type vérin commandé en translation selon un mouvement de va et vient. Cette plaque (5) est accouplée perpendiculairement à la tige (6a) du vérin (6) et disposée transversalement dans la chambre (4). La plaque (5) prend appui dans le fond (4a) de la chambre.

Cette plaque (5) constitue donc la paroi arrière de la chambre (4) et permet au fur et à mesure de la commande du vérin (6), de faire varier le volume de ladite chambre afin de provoquer de manière concomitante l'agitation et le brassage des piques (P).

A noter que la largeur de la plaque (5) est très légèrement inférieure à la largeur de la chambre (4).

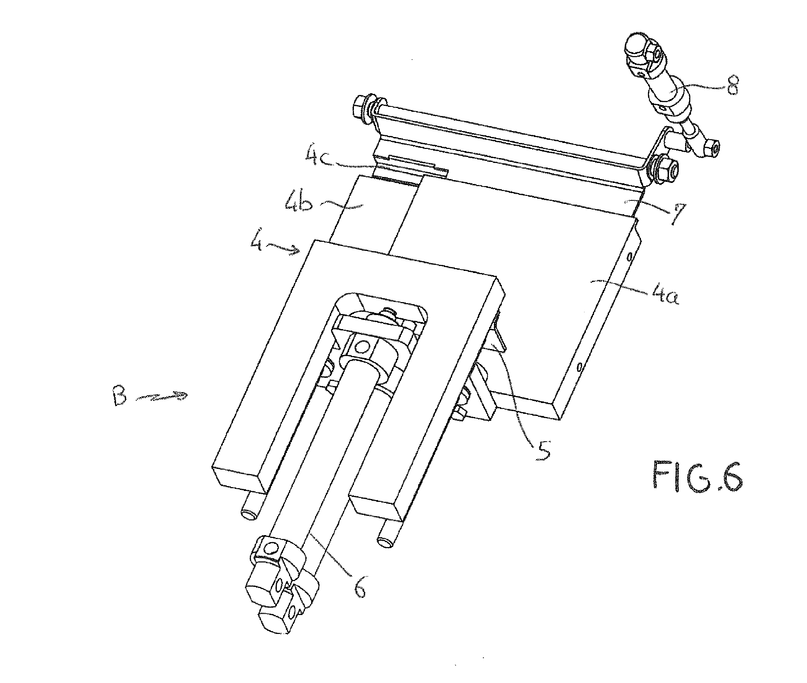

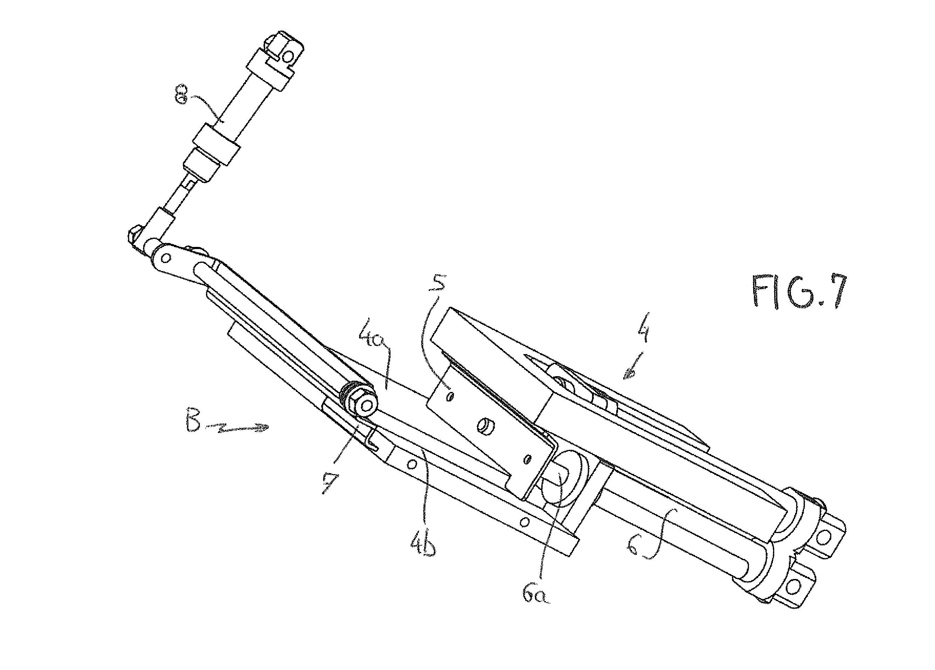

Par ailleurs, le fond (4a) de la chambre et la plaque (5) présentent un bord transversal correspondant sensiblement à celui des piques (P), (figures 6 et 7).

Autrement dit, la plaque (5) présente un talon (5a) coopérant avec un décrochement (4b) du fond (4a), correspondant sensiblement au talon (P2) du pique (P),

La chambre (4) est inclinée en direction du haut par rapport à un plan horizontal.

Le vérin (6) est disposé dans la partie basse de la chambre (4) dont la partie haute présente une fente (4c) en relation avec un volet escamotable (7) pour sélectionner un pique et le diriger dans l'ensemble (C) qui constitue un ensemble de basculement.

Le fait de soumettre les piques (P) à ce mouvement d'agitation, a pour effet de disposer naturellement au moins la rangée disposée en bas de la pile, c'est-à-dire en appui sur le fonds (4a) de telle sorte que les talons (P2) des piques (P) se situent dans le décrochement (4b) et la partie rectiligne (P1) en appui sur le fond (4a), tandis que sous l'effet de poussée de la plaque (5), l'un des piques est amené dans la fente (4c).

A noter que le volet escamotable (7) est assujetti à un vérin (8) commandé en synchronisme avec le vérin (6) de la plaque de brassage (5), pour ouvrir ledit volet lorsque le vérin (6) de la plaque est arrêté.

Le pique sélectionné et disposé dans la fente (4c) de la chambre (4), tombe ensuite par gravité après ouverture du volet (7) dans l'ensemble (C) qui constitue un ensemble de basculement. Cet ensemble (C) est apte, d'une part, à orienter le pique sélectionné de sorte que son talon (P2) soit dirigé vers le haut et, d'autre part, à le libérer dans cette position pour le soumettre à des moyens d'embrochement.

Cet ensemble de basculement (C) est constitué par un berceau (9) comprenant une partie de guidage (10) des piques (P) et une partie de réception (11) desdits piques.

Le berceau (9) est assujetti à un actionneur (12) du type vérin pour être déplacé en translation en vue de soumettre le pique réceptionné à l'action d'une came (13).

Comme indiqué, la came (13) a pour fonction de faire basculer le pique de sorte que son talon (P2) soit dirigé vers le haut.

La partie de guidage (10) et la partie de réception (11) sont deux parties indépendantes.

La partie de réception (11) est également assujettie à un organe actionneur du type vérin (14) pour être écartée temporairement de la partie de guidage (10) en vue de libérer le pique pour le soumettre au moyen d'embrochement. Autrement dit, le vérin (12) a pour fonction de déplacer en translation l'ensemble du berceau (9) avec la partie de guidage (10) et la partie de réception (11), tandis que le vérin (14) a pour fonction, après déplacement de l'ensemble du berceau (9), de déplacer la partie de réception (11) par rapport à la partie de guidage (10).

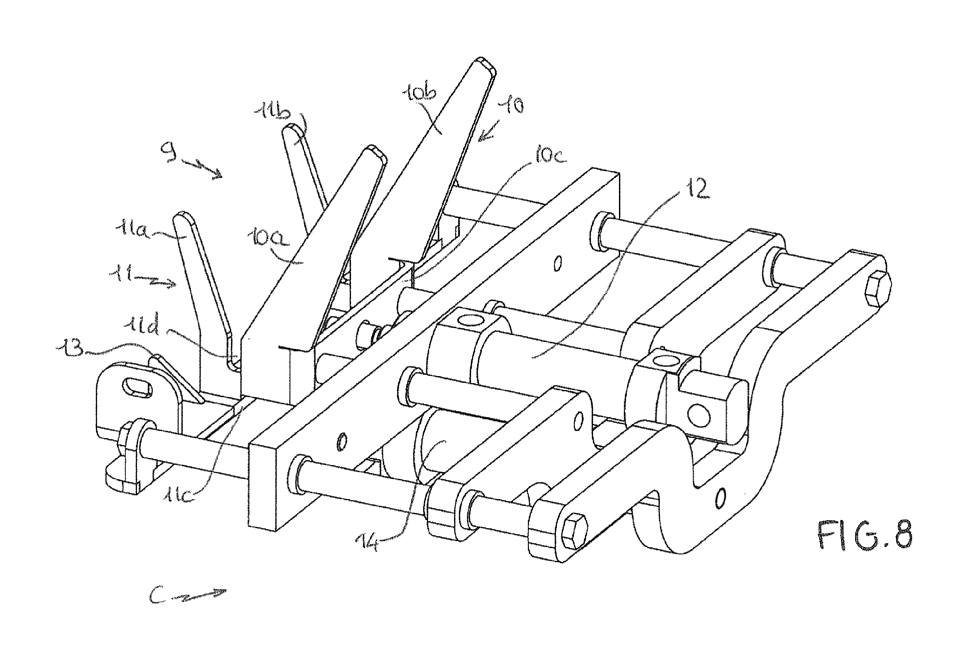

Dans la forme illustrée à la figure 8, la partie de guidage (10) est constituée par deux bras parallèles et inclinés (10a) et (10b) portés par une platine (10c) assujettie à l'organe actionneur (12).

La partie de réception (11) est également constituée par deux bras parallèles (11a) et (11b) disposés en regard et en alignement des bras (10a) et (10b) en étant inclinés en sens inverse des bras (10a) et (10b).

Ces bras (11a) et (11b) sont portés par une platine (11c) assujettie à l'autre organe actionneur (13).

Il résulte donc de ces dispositions que les paires de bras (10a) - (11a) et (10b) - (11b) constituent, en combinaison, un V de centrage délimitant une encoche (11d) pour la réception du pique (P). La came de basculement (13) est solidaire de la platine (11c) et est disposée à proximité des bras (10a), (11a) considérés du côté du talon du pique sélectionné.

A noter que l'écartement des paires de bras (10a)-(11a) et 10b)-(11b), correspond sensiblement à la partie rectiligne des piques en dehors du talon, lequel est positionné à l'extérieur de l'échancrure (11d).

Le fonctionnement est le suivant :
- Les piques sont disposés en vrac dans les différents compartiments (1a) du convoyeur, les talons (P2) étant tous disposés d'un même côté. Sous l'effet de l'entraînement de convoyeur (1) les piques (P) de l'un des compartiments (1a) tombent par gravité dans la chambre d'agitation (4) de l'ensemble (B).
- Le vérin (6) est actionné selon un mouvement de va et vient pour soumettre les piques contenus dans la chambre (4) à un mouvement d'agitation qui a pour but de positionner les piques de la dernière rangée sur leur tranche avec les talons dans le décrochement (4b). Le pique situé à l'extrémité, au niveau de la partie haute de la chambre, est dirigé par la plaque (5) dans la fente (4c). Le vérin (6) est ensuite arrêté. A noter que pour l'agitation, le vérin (6) est par exemple commandé selon deux mouvements de va et vient. Sous l'effet de l'inclinaison du fond (4a) de la chambre, les autres piques non sélectionnés demeurent en appui contre la plaque (5) en étant éloignés de la fente (4c).
- Le vérin (8) est ensuite commandé pour l'ouverture du volet (7) libérant ainsi le pique sélectionné (P) qui tombe par gravité dans le berceau (9) de l'ensemble basculeur (C). Notamment, comme indiqué, la partie rectiligne du pique se positionne sur sa tranche dans l'échancrure (11d) des paires de bras (10a) - (11a) et (10b) - (11b), le talon (P2) dudit pique (P) étant situé à l'extérieur de ladite échancrure.
- Le berceau (9) est alors déplacé linéairement en avant sous l'effet de la commande du vérin (12) de sorte que le pique vient en contact avec la came (13) provoquant d'une manière concomitante son basculement de manière à positionner vers le haut le talon (P2) du pique.
- Le vérin (14) est ensuite commandé pour déplacer les bras (11a) et (11b) par rapport aux bras (10a) et (10b) de manière à libérer le pique et permettre son évacuation en vue de l'acheminer, toujours de manière orientée talon dirigé vers le haut, au niveau des moyens d'embrochement. Par exemple, après libération, le pique peut communiquer avec une goulotte de guidage en relation avec les plaques ou autres agencements recevant les ingrédients destinés à être embrochés par les piques.

Les avantages ressortent bien de la description.

## Revendications

1. Dispositif de distribution de piques à brochettes dits « drapeaux » présentant une partie rectiligne d'embrochement et une partie formant talon de préhension en débordement de l'un des côtés de la partie rectiligne en vue d'alimenter une machine d'embrochement ***caractérisé* en ce qu'il** comprend, en combinaison :
- un ensemble (A) de chargement en vrac de piques,
un ensemble (B) apte à sélectionner un pique et présentant une chambre (4) recevant une quantité de piques en provenance de l'ensemble de chargement, ladite chambre (4) étant assujettie à des moyens (5), (6) aptes à assurer un brassage des piques pour successivement les positionner sur la tranche, sélectionner un pique et diriger ledit pique sélectionné dans un ensemble de basculement (C),
- l'ensemble (C) de basculementest constitué par un berceau (9) comprenant une partie de guidage (10) du pique et une partie de réception (11) dudit pique, le berceau (9) étant assujetti à un actionneur (12) pour être déplacé en translation en vue de soumettre le pique réceptionné à l'action d'une came (13) pour faire basculer ledit pique de sorte que son talon soit dirigé vers le haut, la partie de guidage (10) et la partie de réception (11) sont indépendantes, ladite partie de réception (11) étant assujettie à un organe actionneur (14) pour être écartée temporairement de ladite partie de guidage (10) pour permettre de libérer le pique en vue de le soumettre à des moyens d'embrochement.
- lesdits ensembles (A), (B) et (C) sont en communication et assujettis à des organes pour être commandés en synchronisme.

2. Dispositif selon la revendication 1, ***caractérisé* en ce que** les moyens aptes à assurer un brassage des piques sont constitués par une plaque (5) accouplée à un organe actionneur (6) commandé en translation selon un mouvement de va et vient, ladite plaque étant accouplée perpendiculairement à la tige (6a) de l'organe actionneur (6) et disposée transversalement dans la chambre (4) pour coopérer avec les piques sur au moins une grande partie de leur longueur, lesdits piques étant également disposés transversalement dans la chambre (4).

3. Dispositif selon l'une quelconque des revendications 1-2, ***caractérisé* en ce que** la chambre (4) est inclinée en direction du haut, l'organe actionneur (6) étant disposé dans la partie basse de ladite chambre dont la partie haute présente une fente en relation avec un volet escamotable (7) pour sélectionner un pique et le diriger dans l'ensemble de basculement (C).

4. Dispositif selon la revendication 3, ***caractérisé* en ce que** le volet escamotable (7) est assujetti à un vérin commandé en synchronisme avec l'organe actionneur (6) de la plaque (5) de brassage pour ouvrir ledit volet lorsque ledit organe de la plaque est arrêté

5. Dispositif selon l'une quelconque des revendications 2,3 et 4, ***caractérisé* en ce que** le fond (4a) de la chambre (4) et la plaque (5) présentent un profil transversal correspondant sensiblement à celui des piques.

6. Dispositif selon la revendication 1, ***caractérisé* en ce que** la partie de guidage (10) est constituée par deux bras parallèles et inclinés (10a) et (10b) portés par une platine (10c) assujettie à l'organe actionneur (12) tandis que la partie de réception (11) est constituée par deux bras parallèles et inclinés (11a) et (11b) en sens inverse des bras (10a) et (10b) de la partie de guidage (10) en étant portés par une platine (11c) assujettie à l'autre organe actionneur, lesdits bras constituant en combinaison un V de centrage délimitant une encoche (11d) pour la réception du pique, la came de basculement. (13) étant solidaire de la platine (11c) supportant les bras de la partie de réception et disposée à proximité du bras considéré du côté du talon du pique.

7. Dispositif selon l'une quelconque des revendications 1-6, ***caractérisé* en ce que** l'ensemble de chargement (A) des piques est constitué par un tapis sans fin (1) entraîné pas à pas et présentant une pluralité de compartiment (1a) recevant en vrac une quantité de piques dont les talons sont disposés d'un même côté, chaque compartiment étant apte à être mis en communication avec la chambre de l'ensemble (B) de sélection au fur et à mesure du déplacement du tapis sans fin,

8. Dispositif selon la revendication 7 ***caractérisé* en ce que** le compartiment (1a) de l'ensemble de chargement est en communication avec la chambre de sélection par l'intermédiaire d'un tiroir escamotable par un organe actionneur.

## Patentansprüche

1. Ausgabevorrichtung von Aufspießspießen, bezeichnet als "Fahnen", die einen geradlinigen Aufspießteil und einen Teil aufweisen, der am Überlauf einer der Seiten des geradlinigen Teils einen Greifabsatz zwecks Versorgung einer Aufspießmaschine bildet, ***dadurch gekennzeichnet,* dass** er in Kombination umfasst:
- eine Ladegruppe (A) für Spieße als Schüttgut,
eine Gruppe (B), die geeignet ist, einen Spieß auszuwählen und eine Kammer (4) aufweist, die eine Menge an Spießen aufnimmt, die aus der Ladegruppe stammen, wobei die genannte Kammer (4) Mitteln (5), (6) unterworfen ist, die geeignet sind, ein Vermischen der Spieße zu gewährleisten, um sie sukzessive auf dem Teilabschnitt zu positionieren, einen Spieß auszuwählen und den genannten ausgewählten Spieß in eine Kippstruktur (C) zu leiten,
- die Kippstruktur (C) durch eine Wiege (9) gebildet ist, die einen Führungsteil (10) des Spießes und einen Aufnahmeteil (11) des genannten Spießes umfasst, wobei die Wiege (9) einem Betätigungsglied (12) unterworfen ist, um in Translation verschoben zu werden, um den aufgenommenen Spieß der Einwirkung einer Nocke (13) zu unterziehen, um den genannten Spieß derart kippen zu lassen, dass sein Absatz nach oben gerichtet wird, der Führungsteil (10) und der Aufnahmeteil (11) unabhängig sind, wobei der genannte Aufnahmeteil (11) einem Betätigungsorgan (14) unterworfen ist, um vorübergehend von dem genannten Führungsteil (10) entfernt zu werden, um die Freisetzung des Spießes zu ermöglichen, um ihn Auf spießmitteln zu unterziehen,
- die genannten Gruppen (A), (B) und (C) in Verbindung stehen und Organen unterzogen sind, um im Gleichlauf gesteuert zu werden.

2. Vorrichtung gemäß Anspruch 1, **dadurch gekennzeichnet, dass** die Mittel, die geeignet sind, ein Vermischen der Spieße zu gewähren, durch eine Platte (5) gebildet werden, die an ein Betätigungsorgan (6) gekoppelt ist, das in Translation gemäß einer Hin-und-Herbewegung gesteuert wird, wobei die genannte Platte senkrecht zum Stift (6a) des Betätigungsorgans (6) gekoppelt ist und quer in der Kammer (4) angeordnet ist, um mit den Spießen auf wenigstens einem großen Teil ihrer Länge zusammenzuwirken, wobei die genannten Spieße ebenfalls quer in der Kammer (4) angeordnet sind.

3. Vorrichtung gemäß Anspruch 1-2, ***dadurch gekennzeichnet,* dass** die Kammer (4) in Richtung nach oben geneigt ist, wobei das Betätigungsorgan (6) im unteren Teil der genannten Kammer angeordnet ist, deren oberer Teil einen Schlitz im Verhältnis mit einer ausrückbaren Klappe (7) aufweist, um einen Spieß auszuwählen und ihn in die Kippstruktur (C) zu leiten.

4. Vorrichtung gemäß Anspruch 3, ***dadurch gekennzeichnet,* dass** die ausrückbare Klappe (7) einem Zylinder unterworfen ist, der im Gleichlauf mit dem Betätigungsorgan (6) der Platte (5) zum Vermischen gesteuert ist, um die genannte Platte zu öffnen, wenn das genannte Organ der Platte abgeschaltet ist.

5. Vorrichtung gemäß Anspruch 2, 3, und 4, ***dadurch gekennzeichnet,* dass** der Boden (4a) der Kammer (4) und die Platte (5) ein queres Profil aufweisen, das deutlich dem der Spieße entspricht.

6. Vorrichtung gemäß Anspruch 1*,* ***dadurch gekennzeichnet,* dass** der Führungsteil (10) aus zwei parallelen und geneigten Armen (10a) und (10b) gebildet ist, die von einer Platine (10c) getragen werden, die dem Betätigungsorgan (12) unterworfen ist, während der Aufnahmeteil (11) durch zwei parallele und geneigte Arme (11a) und (11b) in umgekehrter Richtung der Arme (10a) und (10b) des Führungsteils (10) gebildet ist, wobei sie von einer Platine (11c) getragen werden, die dem anderen Betätigungsorgan zugeordnet ist, wobei die genannten Arme in Kombination ein Zentrierungs-V bilden, das eine Auskerbung (11d) für die Aufnahme des Spießes begrenzt, wobei die Kippnocke (13) fest mit der Platine (11c) fest verbunden ist, die die Arme des Aufnahmeteils tragen und in der Nähe des betrachteten Arms auf der Seite des Absatzes des Spießes angeordnet ist.

7. Vorrichtung gemäß Anspruch 1 - 6, ***dadurch gekennzeichnet,* dass** die Ladegruppe (A) der Spieße durch ein Endlosband (1) gebildet ist, das im Schrittbetrieb angetrieben ist und eine Vielzahl von Fächern (1a) aufweist, die als Schüttgut eine Menge von Spießen aufnehmen, deren Absätze auf einer und derselben Seite angeordnet sind, wobei jedes Fach geeignet ist, mit der Kammer der Auswahlgruppe (B) im Verlauf der Verschiebung des Endlosbandes in Verbindung gebracht zu werden.

8. Vorrichtung gemäß Anspruch 7, ***dadurch gekennzeichnet,* dass** das Fach (1a) der Ladegruppe mit der Auswahlkammer über einen ausrückbaren Schubkasten durch ein Betätigungsorgan in Verbindung steht.

## Claims

1. A dispensing device of skewers called "flags", which have a straight skewering portion and a portion forming a gripping hook overlapping one of the sides of the straight portion for the purpose of feeding a skewering machine **characterised in that** it includes, in a combination:
- A unit (A) for loading skewers in bulk,
- A unit (B) that is capable of selecting a skewer and which has a chamber (4) that holds a set quantity of skewers from the loading unit; the said chamber (4) being controlled by the devices (5) and (6), that are capable of stirring the skewers in order to successively position them on the section, select a skewer and then direct the said selected skewer in a tilt assembly (C).
- The tilt assembly (C) consists of a cradle (9) comprising a skewer guiding part (10) and a receiving part (11) of the said skewer; the cradle (9) being driven by an actuator (12) consequently moves in a straight line, so that the received skewer can be controlled by the action of a cam (13) for tilting the said skewer such that its hook is moved to face upwards. The guiding part (10) and the receiving part (11) are independent, the said receiving part (11) being controlled by an actuator mechanism (14) in order to temporarily move it away from the said guiding part (10), which will allow the skewer to be released in order for it to be controlled by the skewering mechanisms.
- The said units (A), (B) and (C) communicate with each other and are subject to mechanisms that allow them to be controlled in synchronisation.

2. A device according to claim 1, **characterised in that** the mechanisms capable of stirring the skewers consist of a plate (5) coupled with an actuator mechanism (6), controlled in a straight line in a reciprocating motion, the said plate being coupled perpendicularly to the rod (6a) of the actuator mechanism (6) and arranged transversally in the chamber (4) in order to co-operate with the skewers, at least on a major part of their length, the said skewers also being arranged transversally in the chamber (4).

3. Device according to any one of the claims 1-2, **characterised in that** the chamber (4) is inclined upwards, the actuator mechanism (6) being placed in the lower part of the said chamber, the upper part of which has a slit connected to a retractable shutter (7) for selecting a skewer and directing it towards the tilt assembly (C).

4. Device according to the claim 3, **characterised in that** the retractable shutter (7) is controlled by a jack, which in turn is controlled in synchronisation with the actuator mechanism (6) of the stirring plate (5) for opening the said shutter when the said mechanism of the plate has shut down.

5. Device according to any one of the claims 2, 3 and 4, **characterised in that** the bottom (4a) of the chamber (4) and the plate (5) have a transversal profile significantly corresponding to that of the skewers.

6. Device according to claim 1, **characterised in that** the guiding part (10) consists of two parallel and inclined bars (10a) and (10b), supported by a backing plate (10c) that is controlled by the actuator mechanism (12) while the receiving part (11) consists of two parallel and inclined bars (11a) and (11b), that face the opposite direction as the bars (10a) and (10b) of the guiding part (10), and are supported by a backing plate (11c) that is controlled by the other actuator mechanism, the said bars forming a centring V in combination, which demarcates a slot (11d) for receiving the skewer, the tilting cam (13) being interdependent with the backing plate (11c) that supports the bars of the receiving part and being placed close to the bar that is considered to be on the side of the hook of the skewer.

7. Device according to any one of the claims 1-6, **characterised in that** the skewer loading unit (A) consists of a continuous belt (1) that is driven step-by-step and has multiple compartments (1a) holding bulk amounts of skewers, the hooks of which are on the same side, each compartment being capable of connecting with the chamber of the selection unit (B) along with the movement of the continuous belt.

8. Device according to the claim 7 **characterised in that** the compartment (1a) of the loading unit is in contact with the selection chamber through a retractable slide by an actuator mechanism.
